# EUROPEAN PATENT SPECIFICATION

(11) **EP 3 738 943 B1**
(45) Date of publication and mention of the grant of the patent: **29.01.2025**
(21) Application number: 18900041.7
(22) Date of filing: 10.12.2018
(51) Int. Cl.: C05F 11/00, A01N 37/46, C05F 11/10, C05G 3/60

(54) **USE OF AN AGRICULTURAL COMPOSITION AS BIOSTIMULANT**
VERWENDUNG EINER LANDWIRTSCHAFTLICHEN ZUSAMMENSETZUNG ALS BIOSTIMULANZ
UTILISATION D'UNE COMPOSITION AGRICOLE EN TANT QUE BIOSTIMULANT

(30) Priority: 09.01.2018 ES 201830026
(43) Date of publication of application: 18.11.2020
(73) Proprietor: Desarrollo Agrícola y Minero, S.A., 50013 Zaragoza (ES)
(72) Inventor: SOLANS ARTIGAS, Carlos, 50013 Zaragoza (ES); MARTÍN ORO, Eitan, 50013 Zaragoza (ES); BERNAD VIAMONTE, David Cesar, 50013 Zaragoza (ES)
(74) Representative: Schäfer, Matthias W.
(86) International application number: PCT/ES2018/070795
(87) International publication number: WO 2019/138145

(56) References cited:
- WO-A1-2013/135919
- WO-A1-2013/138946
- WO-A1-2013/138946
- PL-A1- 415 593
- PL-B1- 232 367
- ANONYMOUS: "Aminopool 80/Aminopool 80 MGX", BIOPROTAN, 4 October 2017 (2017-10-04), pages 1 - 3, XP055624976, Retrieved from the Internet <URL:http://www.bioprotan.coin/in/bio-stimulants/aminopool-80-80-m.ex.php> [retrieved on 20190923]
- ANONYMOUS: "Aminopool®80/Aminopool®80 MGX", BIOPROTAN., 4 October 2017 (2017-10-04), XP055624976, Retrieved from the Internet <URL:http://www.bioprotan.coin/in/bio-stimulants/aminopool-80-80-m.ex.php> [retrieved on 20180606]

## Description

This description relates, as its title indicates, to the use of an agricultural composition as a biostimulant against biotic and abiotic stress.

### Field of the invention

The invention relates to the field of biostimulants against biotic and abiotic stress.

### Current State of the Art

Within the scope of this description a series of definitions are established beforehand:
Fertilizer: product used in agriculture or gardening that, by delivering nutrients, aids plant growth, enhances performance and improves the quality of harvests or, which due to its specific action, modifies , as appropriate, the fertility of soil or its physical, chemical or biological characteristics.
Nutrient: Essential chemical element for plant life and growth. In addition to carbon (C), oxygen (O) and hydrogen (H), especially from air and water, nutrient elements are classed as: primary nutrients, secondary nutrients, and micronutrients.

Primary nutrients: these are exclusively nitrogen, phosphorus, and potassium.

Secondary nutrients: calcium, magnesium, sodium and sulfur.

Micronutrients: boron, cobalt, copper, iron, manganese, molybdenum, and zinc, which are essential elements for plant growth, albeit in small quantities in comparison to primary and secondary nutrients.

Biostimulant: any substance that, when applied to plants, is capable of improving the efficacy of these in the absorption and assimilation of nutrients, tolerance to biotic or abiotic stress, or improving any of their agronomic characteristics, regardless of the nutrient content of the substance.

Biotic stress: stress caused in plants by living organisms such as viruses, bacteria, fungi, as well as by insects and other plants.

Abiotic stress: stress caused in plants by causes that are not biotic and which essentially are due to drought, high and low temperatures, salinity, heavy metals, ultraviolet radiation, soil acidity and applications of phytosanitary products.

Amino acid: organic molecule with an amine group(-NH₂) and a carboxyl group(-CCOH) and that is the basic building block of proteins. Specifically, and for the present description, when amino acids are referred to, the following ones, listed by their name and abbreviation will be considered: alanine (Ala); arginine (Arg); aspartic acid (Asp); glutamic acid (Glu); cysteine (Cys); glycine (Gly); hydroxyproline (Hyp); histidine (His); isoleucine (Ile); leucine (Leu); lysine (Lys); methionine (Met); phenylalanine (Phe); proline (Pro); serine (Ser); tyrosine (Tyr); threonine (Thr); tryptophan (Trp) and valine (Val).

Aminogram: a list, in the form of a table of percentages, diagram or other means that shows the number of amino acids present and their quantity in a given product.

Protein hydrolysate or hydrolysed proteins: product obtained from proteins by a process of physical, chemical, enzymatic hydrolysis or by the combination of several of the aforementioned. Depending on the degree of hydrolysis, the resulting product will have a greater or lesser content of proteins, peptides, and amino acids in their free state.

Hydrolysed proteins are widely used in human and animal foodstuffs. However, the use of protein hydrolysates with a greater or lesser quantity of amino acids in the form of commercial products is relatively recent in agriculture. At the beginning of the 20th century the nutritional functions of protein hydrolysates and of amino acids on plants were begun to be studied. It was not until the decade of the 1970s that more numerous, more specific scientific studies appeared on the effects of protein hydrolysates and amino acids on plants, as scientists began to understand the complex interactions between plants and the ecosystem where the roots are.

At the end of the decade of the 1980s the first studies on the effects of liquid fertilizers with these substances on various fruit and ornamental crops were published. In these studies, it is described that applications by spraying increase plant vigour. In that regard, the high level of technical qualification of the professionals in the agricultural sector and their in-depth knowledge of the metabolic needs of plants brought about an increase in the use of fertilizers with free amino acids.

From the 1990s onwards Spanish agro-chemical companies began to launch liquid fertilizers with amino acids.

Although the use of amino acids in agriculture is well established, they have a series of limitations that can be highlighted.
- Most of the products are liquid fertilizers that use amino acids as a source of organic nitrogen.
- They are diluted liquid products with the consequent problem of expensive transport costs and the creation of great quantities of waste from the containers which gives rise to environmental problems.
- They are products that, together with amino acids, have a great quantity of peptides and non-hydrolysed proteins, with the consequent loss in agronomic efficacy.
- They are products that do not guarantee the exact composition of the free amino acids over time, due to variability in production processes or in the raw materials used.
- They are products that may contain impurities such as sulfates, nitrates, ... in high quantities, that hamper mixes.

Therefore, any professional in the agricultural sector knows that it would be of great interest to develop commercial agricultural compositions that are not just fertilizers but are of use as biostimulants and that, in addition to solving the aforementioned problems, can be mixed with phytosanitary products to improve efficacy and/or agronomic results.

### Background of the invention

Numerous references to fertilizers with amino acids are known, such as those found, for example, in Patents WO03079790 "Compositions with a biostimulating activity", ES2628278 "Biostimulant formulation for plant growth and development and for inducing resistance, for the control of diseases caused by phytopathogenic viruses and method of preparation", WO2016132000 "Acid composition based on leonardite, amino acids and surfactants" or ES2329864" Organic product that enhances atrazine persistence in soil and acts as an edaphological biostimulant", but all of them present the drawbacks previously mentioned that are common to fertilizers with amino acids. Additionally, there are specific products, such as Aminopool^{®}80 and Aminopool^{®}80 MGX", comprising aminograms with 19 and 17 aminoacids, respectively.

Furthermore, there are certain products, such as those described in Patents ES2225621 "Biological pesticide based on chitosan and entomopathogenic nematodes" and ES2171131 "Biological pesticide based on chitosan" that use chitosan as a biostimulant.

Other solutions use an organic substrate as a biostimulant, as described in Patent ES2360318 "Procedure for the production of an organic substrate of functional culture, inoculated, apt for the development of horticultural seedlings at seedbed level, with biopesticidal, biostimulating and/or biofertilizing capacity".

Other options are also known that convert the highly polluting liquids from evaporation ponds at oil mills to obtain a fertilizing, phytofortifying and biostimulating product that potentiates nutrient assimilation, as claimed in patent WO2012017113 "Composition containing a phytofortifier obtained from conversion of oil-mill wastewater".

### Description of the invention

To resolve the problems that currently exist in the use of fertilizing/biostimulating products based on free amino acids, improving the state of the art, the use of an agricultural composition as a biostimulant on farms according to claim 1 has been envisaged, which presents better agronomic action. It is used against biotic and abiotic stress and, moreover and surprisingly, its use in combination with phytosanitary products improves their efficacy and/or agronomic results.

A reference composition used is characterised by :
- a solid state, in the form of powder or microgranules, soluble in the aqueous phase and with a low moisture content,
- a nitrogen content greater than 10.0% by weight with respect to the total weight of the composition,
- an organic nitrogen content greater than 10.0% by weight with respect to the total weight of the composition,
- a free amino acids content greater than 65.0% by weight with respect to the total weight of the composition,
- a characteristic, stable aminogram that comprises at least 10 of the amino acids from the group formed by alanine (Ala), arginine (Arg), aspartic acid (Asp), glutamic acid (Glu), cysteine (Cys), glycine (Gly), hydroxyproline (Hyp), histidine (His), isoleucine (Ile), leucine (Leu), lysine (Lys), methionine (Met), phenylalanine (Phe), proline (Pro), serine (Ser), tyrosine (Tyr), threonine (Thr), tryptophan (Trp) and valine (Val),

Their use is preferably by ground spraying, employing manual systems, motor pumps, or other similar means, although they can also be used in fertigation systems or by aerial spraying.

### Advantages of the invention

This use of an agricultural composition as a biostimulant affords numerous advantages over the products currently available, among which it is noteworthy that the product is presented in a soluble, solid format with a low moisture content and a high concentration of substances with biostimulating activity, for this reason its use allows a great deal of packaging to be eliminated, which leads to a reduction in both waste and in the costs of packaging, transport and labour.

It is important to highlight that, in addition to acting as a biostimulant against biotic and abiotic stress, strikingly it has been shown to have a surprising effect derived from its use as a biostimulant, in combination with the use of phytosanitary products, since it improves their efficacy and/or agronomic results.

Another noteworthy advantage of the product, obtained as a result of this surprising effect, is that it can be mixed with most phytosanitary products without any problems with the mixes; there are no precipitates, no emulsion break-ups nor problems with the efficacy of the product. This detail, from the point of view of its applications, is fundamental, since there are many fertilizers and/or biostimulants on the market that cannot be applied in combination with phytosanitary products.

It is important to point out that the product has a stable aminogram over time, compared to the variability of the products currently on the market. We obtain repetitive agronomic results with its use in successive applications, which implies a normalisation of the results.

Due to its high concentration of biostimulating substances, the product is free of other substances that may be toxic, such as nitrates, sulfates, heavy metals, etc., and thus its use presents a very positive toxicological profile according to international standards, and this will contribute to its possible registration. This facilitates the declaration of this composition as free of phytosanitary residues, with clear agricultural, sanitary, and economic benefits over the products.

In addition, it is important to highlight that the present agricultural composition does not include antioxidants or preservatives, as is usual in other liquid compositions with organic substances. This is due to the fact that the composition has a very low moisture content and, hence, low water activity. As a result, incorporating substances that may act as contaminants or increase the toxicity or phytotoxicity of the composition is avoided.

Another significant advantage is that its use in combination with phytosanitary products has been demonstrated, improving their efficacy and/or the agronomic results. Thus, the quantity of these can be reduced with the consequent reduction in costs, in environmental risks, in waste and in toxicity. Moreover, as better agronomic results are obtained, the crop is in better conditions to obtain an improved harvest or one of better quality. Indeed, it has been shown that the use of this composition as a biostimulant not only does not affect the efficacy of phytosanitary products but also produces a better response in plants to stress caused by temperature, resulting in a better stimulated plants that bear fruit of greater quality.

### Preferred embodiment of the invention

The use of an agricultural composition presented carries out a biostimulating treatment on agricultural farms against biotic and abiotic stress and improves the efficacy and/or agronomic results of phytosanitary products when it is combined with them. The agricultural composition used for this invention is characterised basically by the following characteristics:
- it is presented in solid state, in the form of powder or microgranules.
- it is soluble in the aqueous phase
- low moisture content
- high nitrogen content
- high organic nitrogen content
- high free amino acids content
- characteristic, stable, defined animogram

The solubility of the composition will be greater than 50.0 grams of the composition/litre of water, and preferably will be between 100.0 and 250.0 grams of the composition/litre of water

The composition moisture is between 2.0 and 10.0% by weight and preferably between 3.0 and 5.0% by weight

The composition presented will be in the form of powder or microgranules with an average particle diameter of less than 300 microns.

The composition will have a high nitrogen content, which is greater than 10.0% by weight and preferably between 10.4 and 13.0% by weight.

The composition will have a high organic nitrogen content, which is greater than 10.0% by weight and preferably between 10.4 and 13.0% by weight.

The composition will have a high free amino acids content, established at more than 65.0% by weight. They are present in a proportion of between 65.0% and 95.0% by weight, preferably between 70.0%-90.0% by weight with respect to the total weight of the composition.

The aminogram is characterised by having the following: alanine (Ala); arginine (Arg), aspartic acid (Asp); cysteine (Cys); glutamic acid (Glu); glycine (Gly); histidine (His); isoleucine (lle); leucine (Leu); lysine (Lys); methionine (Met); phenylalanine (Phe); proline (Pro); serine (Ser); tyrosine (Tyr); threonine (Thr) and valine (Val).

A reference aminogram is characterised by having at least 6 amino acids in its composition, in a percentage greater than 5.0% by weight of amino acids from the group chosen from among the amino acids: alanine (Ala); arginine (Arg); aspartic acid (Asp); glutamic acid (Glu); glycine (Gly); leucine (Leu); phenylalanine (Phe); proline (Pro); serine (Ser); threonine (Thr) and valine (Val).

Ir the inventive composition, the aminogram comprises above 8.0% by weight of amino acids from the group chosen from among the amino acids: glutamic acid (Glu); glycine (Gly); proline (Pro); serine (Ser). And more preferably above 10.0% by weight of amino acids from the group chosen from among the amino acids: glutamic acid (Glu); proline (Pro); serine (Ser).

In that respect, Table 1 shows an example of an aminogram that fulfils the aforementioned conditions, which would be described as:

**- Table 1-**

| **Amino acid** | **Amino acid abbreviation** | **Percentage based on 100% amino acids** |
|---|---|---|
| Alanine | Ala | 5.31 |
| Arginine | Arg | 6.12 |
| Aspartic acid | Asp | 7.81 |
| Glutamic acid | Glu | 11.69 |
| Cysteine | Cys | 1.28 |
| Glycine | Gly | 8.50 |
| Histidine | His | 1.63 |
| Isoleucine | Ile | 3.75 |
| Leucine | Leu | 7.38 |
| Lysine | Lys | 1.63 |
| Methionine | Met | 0.58 |
| Phenylalanine | Phe | 5.50 |
| Proline | Pro | 12.38 |
| Serine | Ser | 14.48 |
| Tyrosine | Tyr | 0.76 |
| Threonine | Thr | 5.34 |
| Valine | Val | 5.87 |

### Application conditions and results obtained experimentally in the field

To reflect the efficacy of the invention presented in this description, comparative studies were performed in commercial conditions. Thus, commercial application of the described agricultural composition will be carried out by ground spraying with manual sprayers, motor pumps, or other similar means or by fertigation or aerially. The invention is further characterised by a specific use, with a product dose of between 0.25 kg/ha and 1.5 kg/ha for sprayed application, between 3.0 kg/ha and 5.0 kg/ha of the composition described herein for application by fertigation and between 0.1 kg/ha and 0.4 kg/ha for aerial application, always on a dry basis.

As is shown in the following examples, the experimental studies performed have proven the efficacy of its use as a biostimulant against biotic and abiotic stress. Moreover, during the course of the experiments, surprisingly, the enhancing effect derived from its use as a biostimulant, on combined use with phytosanitary products has been shown, as it considerably improves their efficacy and/or the agronomic results obtained.

### Example 1: Application of the agricultural composition together with fungicide to control the Venturia inaequalis fungus on apple trees.

The objective of the protocol was to evaluate the effect of the agricultural composition of the present invention, applied in a curative mix with a fungicide (difenoconazole) to control apple scab (*Venturia inaequalis*). Location: Brazil. Variety: Gala.

Treatment:
1. Untreated control specimen
2. Difenoconazole 250g/l, dose 14 ml/hl
3. Agricultural composition 25.0 g/hl + difenoconazole 250 g/l, dose 14 ml/hl
4. Agricultural composition 50.0 g/hl + difenoconazole 250 g/l, dose 14 ml/hl

### Number of applications: 9

Use of solution: 1000 I/ha to dripping point.

Parameters evaluated: Efficacy.

### Results:

**- Table 2 -**

| **Treatment** | **Efficacy (%)** |
|---|---|
| Untreated control specimen | 0 |
| Difenoconazole 250g/l, dose 14 ml/hl | 47.5 |
| Agricultural composition 25.0 g/hl + difenoconazole 250 g/l, dose 14 ml/hl | 78.3 |
| Agricultural composition 50.0 g/hl + difenoconazole 250 g/l, dose 14 ml/hl | 80.0 |

The conclusions of the example indicate that the agricultural composition significantly improves the performance of difenoconazole fungicide on apple.

### Example 2: Application of the agricultural composition together with a fungicide to control the Phakopsora pachyrhizi fungus on soybeans.

The objective of the protocol was to evaluate the effect of the agricultural composition of the present invention applied in combination with a phytosanitary product (cyproconazole+azoxystrobin) for the control of soybean rust (*Phakopsora pachyrhizi*). Location Brazil. Variety: NA5909 RG.

Treatment:
1. Standard treatment: Cyproconazole 20% + Azoxystrobin 8% 300 cc/ha
2. Cyproconazole 20% + Azoxystrobin 8% 300 cc/ha + agricultural composition 300 g/ha

### Number of applications: 3

Use of solution: 130 I/ha

Parameters evaluated: Efficacy

### Results:

**- Table 3 -**

| **Treatment** | **Efficacy (%)** |
|---|---|
| Standard treatment: Cyproconazole 20% + azoxystrobin 8% 300 cc/ha | 62.0 |
| Cyproconazole 20% + azoxystrobin 8% 300 cc/ha + agricultural composition 300 g/ha | 69.0 |

The conclusions of the example indicate that the agricultural composition improves the performance of the fungicide (Cyproconazole+ Azoxystrobin) on soybeans.

### Example 3: Application of the agricultural composition together with mixes of systemic fungicides to control the Venturia inaequalis fungus on apple trees.

The aim of the protocol was to evaluate if the application of the agricultural composition of the present invention, applied in mixes of standard treatments with systemic fungicides, eliminates the need for contact fungicides due an improvement in the efficacy of former for controlling apple scab (*Venturia inaequalis*). Location: France Variety: Golden.

Treatment:
1. Untreated control specimen
2. Treatment with systemic and contact fungicides (50% cyprodinil, 80% micronized sulfur, 40% pyrimethanil, 25% difenoconazole and 80% captan.
3. Treatment with systemic fungicides (cyprodinil 50%, pyrimethanil 40% and difenoconazole 25%) and the agricultural composition in a dose of 1.0 kg/ha.

### Number of applications: 3.

Use of solution: 260 I/ha
Parameters evaluated: Percentage of fruit damaged by scab and percentage of shoots damaged by scab.

### Results:

**- Table 4 -**

| **Treatment** | **Damaged fruit (%)** | **Damaged shoots (%)** |
|---|---|---|
| Untreated control specimen | 9.7 | 36.7 |
| Treatment with systemic and contact fungicides | 5.5 | 22.5 |
| Treatment with systemic fungicides and the agricultural composition in a dose of 1.0 kg/ha. | 7.3 | 20.0 |

The conclusions of the example indicate that applying the agricultural composition to the treatment with systemic fungicides shows similar results to the use of systemic and contact fungicides.

### Example 4: Application of the agricultural composition in combination with post-emergence herbicides to help crops recover from the phytotoxicity of the phytosanitary product and obtain better agronomic performance.

The objective of the protocol was to evaluate the use of the agricultural composition of the present invention applied in a protocol in combination with a post-emergence herbicide (2,4-D and bromoxynil) for weed control in corn growing. Location: Romania.

Development: After 2 days of applying the post-emergence herbicide in a dose of 1.0 I/ha, phytotoxicity appeared on leaves. 400.0 g/ha of the agricultural composition was applied, which resulted in the disappearance of this phytotoxicity after 6 days.

All of the information referring to examples or embodiments form part of the description of the invention.

### Example 5: Application of the agricultural composition against abiotic stress caused by salinity in lettuces.

The objective of the protocol was to evaluate the use of the agricultural composition of the present invention applied to lettuces subjected to salt stress. Location: Chile.

Treatment:
1. Untreated control specimen
2. Specimen with water stress.
3. Specimen with water stress and agricultural composition, in a dose of 1.0 g/l by foliar application.
4. Specimen with water stress and agricultural composition, in a dose of 3.0 g/l, by fertigation.

### Number of applications: 2

Parameters evaluated: Percentage of dry matter.

### Results:

**- Table 5 -**

| **Treatment** | **Dry matter (%)** |
|---|---|
| Untreated control specimen | 69.11 |
| Specimen with water stress. | 61.81 |
| Specimen with water stress and agricultural composition, in a dose of 1.0 g/l, by foliar application. | 69.44 |
| Specimen with water stress and agricultural composition, in a dose of 3.0 g/l, by fertigation. | 67.39 |

The conclusions of the example indicate that the agricultural composition, both in foliar application and in fertigation, significantly improves the percentage of dry matter, enabling the plant to overcome stress caused by high salinity.

### Example 6: Application of the agricultural composition against biotic stress caused by Black Sigatoka in banana plants.

The objective of the protocol was to evaluate the use of the agricultural composition of the present invention applied to banana plants subjected to biotic stress due to the presence of *Black Sigatoka.* Location: Costa Rica. Variety: Grand Nain.

Treatment:
1. Untreated control specimen
2. Mancozeb 600.0 g/l 2.0 litres + 2.0 litres of oil
3. Agricultural composition 150.0 g/ha + 3.0 litres of oil

### Number of applications: 17 applications

Use of solution: 25.0 I/ha
Parameter evaluated: Average severity index.

### Results:

**- Table 6 -**

| **Treatment** | **Average severity index** |
|---|---|
| Untreated control specimen | 207 |
| Mancozeb 600 g/l 2.0 litres + 2.0 litres of oil | 31.4 |
| Agricultural composition 150.0 g/ha + 3.0 litres of oil | 93.1 |

The conclusions of the example indicate that the agricultural composition results in the banana plant being able to better withstand the biotic stress caused by the disease.

All of the information referring to examples or embodiments form part of the description of the invention.

## Claims

1. - Use of an agricultural composition that comprises:
- a solid state in the form of powder or microgranules, soluble in the aqueous phase and with a low moisture content,
- a nitrogen content greater than 10.0% by weight with respect to the total weight of the composition,
- an organic nitrogen content greater than 10.0% by weight with respect to the total weight of the composition,
- a free amino acids content greater than 65.0% by weight with respect to the total weight of the composition,
- a characteristic, stable aminogram that comprises alanine (Ala), arginine (Arg), aspartic acid (Asp), cysteine (Cys), glutamic acid (Glu), glycine (Gly), histidine (His), isoleucine (Ile), leucine (Leu), lysine (Lys), methionine (Met), phenylalanine (Phe), proline (Pro), serine (Ser), tyrosine (Tyr), threonine (Thr) and valine (Val) and optional hydroxyproline (Hyp) and tryptophan (Trp),
**wherein** the aminogram of the agricultural composition has, in its composition, a percentage greater than 8.0% by weight of amino acids from the group formed by : glutamic acid (Glu), glycine (Gly), proline (Pro), and serine (Ser),
**as** a biostimulant against biotic and abiotic stress on agricultural farms.

2. - Use of an agricultural composition, according to the preceding claim, **wherein** the aminogram of the agricultural composition has, in its composition, at least 6 amino acids in a percentage greater than 5.0% by weight of amino acids from the group formed by : alanine (Ala), arginine (Arg), aspartic acid (Asp), leucine (Leu), phenylalanine (Phe), threonine (Thr) and valine (Val).

3. - Use of an agricultural composition, according to any of the preceding claims, **wherein** the aminogram of the agricultural composition has, in its composition, a percentage greater than 10.0% by weight of amino acids from the group formed by : glutamic acid (Glu), proline (Pro), and serine (Ser).

4. - Use of an agricultural composition, according to any of the preceding claims, **wherein** the solubility of the composition is greater than 50.0 grams of the composition/litre of water, being preferably between 100.0 and 250.0 grams of the composition/litre of water.

5. - Use of an agricultural composition, according to any of the preceding claims, **wherein** the moisture content of the composition is between 2.0% and 10.0% by weight and preferably between 3.0% and 5.0% by weight.

6. - Use of an agricultural composition, according to any of the preceding claims, **wherein** the composition is presented in the form of powder or microgranules with a mean particle diameter of less than 300 microns.

7. - Use of an agricultural composition, according to any of the preceding claims, **wherein** the composition has a nitrogen content and/or organic nitrogen content in a proportion of between 10.4% and 13.0 % by weight with respect to the total weight of the composition.

8. - Use of an agricultural composition, according to any of the preceding claims, **wherein** the composition has a free amino acids content in a proportion of between 65.0% and 95.0 % by weight, and preferably between 70.0% and 90.0% by weight, with respect to the total weight of the composition.

9. - Use of an agricultural composition, according to any of the preceding claims, **wherein** the treatment is carried out with a foliar application product dose of between 0.25 kg/ha and 1.5 kg/ha.

10. - Use of an agricultural composition, according to any of the claims 1 to 8, **wherein** the treatment is carried out with a fertigation application product dose of between 3.0 kg/ha and 5.0 kg/ha.

11. - Use of an agricultural composition, according to any of the claims 1 to 8, **wherein** the treatment is carried out with an aerial application product dose of between 0.1 kg/ha and 0.4 kg/ha.

12. - Use of an agricultural composition, according to any of the preceding claims, **wherein** the composition is mixed with a phytosanitary product.

## Patentansprüche

1. - Verwendung einer landwirtschaftlichen Zusammensetzung, die Folgendes aufweist:
- einen festen Zustand in Form von Pulver oder Mikrogranulat, löslich in der wässrigen Phase und mit niedrigem Feuchtigkeitsgehalt,
- einen Stickstoffgehalt von mehr als 10,0 Gew.-% bezogen auf das Gesamtgewicht der Zusammensetzung,
- einen Gehalt an organischem Stickstoff von mehr als 10,0 Gew.-% bezogen auf das Gesamtgewicht der Zusammensetzung,
- einen Gehalt an freien Aminosäuren von mehr als 65,0 Gew.-% bezogen auf das Gesamtgewicht der Zusammensetzung,
- ein charakteristisches, stabiles Aminogramm, das Alanin (Ala), Arginin (Arg), Asparaginsäure (Asp), Cystein (Cys), Glutaminsäure (Glu), Glycin (Gly), Histidin (His), Isoleucin (Ile), Leucin (Leu), Lysin (Lys), Methionin (Met), Phenylalanin (Phe), Prolin (Pro), Serin (Ser), Tyrosin (Tyr), Threonin (Thr) und Valin (Val) sowie optional Hydroxyprolin (Hyp) und Tryptophan (Trp) aufweist,
**wobei** das Aminogramm der landwirtschaftlichen Zusammensetzung in seiner Zusammensetzung einen Gewichtsanteil von mehr als 8,0 Gew.-% an Aminosäuren aus der Gruppe der Glutaminsäure (Glu), Glycin (Gly), Prolin (Pro) und Serin (Ser) aufweist,
**als** Biostimulans gegen biotischen und abiotischen Stress in landwirtschaftlichen Betrieben.

2. - Verwendung einer landwirtschaftlichen Zusammensetzung gemäß dem vorhergehenden Anspruch, **wobei** das Aminogramm der landwirtschaftlichen Zusammensetzung in seiner Zusammensetzung mindestens 6 Aminosäuren in einem Gewichtsprozentsatz von mehr als 5,0 Gew.-% Aminosäuren aus der Gruppe enthält, die gebildet wird aus: Alanin (Ala), Arginin (Arg), Asparaginsäure (Asp), Leucin (Leu), Phenylalanin (Phe), Threonin (Thr) und Valin (Val).

3. - Verwendung einer landwirtschaftlichen Zusammensetzung gemäß einem der vorhergehenden Ansprüche, **wobei** das Aminogramm der landwirtschaftlichen Zusammensetzung in seiner Zusammensetzung einen Anteil von mehr als 10,0 Gew.-% an Aminosäuren aus der Gruppe der Glutaminsäure (Glu), Prolin (Pro) und Serin (Ser) aufweist.

4. - Verwendung einer landwirtschaftlichen Zusammensetzung gemäß einem der vorhergehenden Ansprüche, **wobei** die Löslichkeit der Zusammensetzung größer als 50,0 g der Zusammensetzung/Liter Wasser ist, vorzugsweise zwischen 100,0 und 250,0 Gramm der Zusammensetzung/Liter Wasser.

5. - Verwendung einer landwirtschaftlichen Zusammensetzung gemäß einem der vorhergehenden Ansprüche, **wobei** der Feuchtigkeitsgehalt der Zusammensetzung zwischen 2,0 und 10,0 Gew.-% und vorzugsweise zwischen 3,0 und 5,0 Gew.-% liegt.

6. - Verwendung einer landwirtschaftlichen Zusammensetzung gemäß einem der vorhergehenden Ansprüche, **wobei** die Zusammensetzung in Form von Pulver oder Mikrogranulat mit einem mittleren Partikeldurchmesser von weniger als 300 Mikrometern vorliegt.

7. - Verwendung einer landwirtschaftlichen Zusammensetzung gemäß einem der vorhergehenden Ansprüche, **wobei** die Zusammensetzung einen Stickstoffgehalt und/oder einen Gehalt an organischem Stickstoff in einem Verhältnis zwischen 10,4 % und 13,0 Gew.-% bezogen auf das Gesamtgewicht der Zusammensetzung aufweist.

8. - Verwendung einer landwirtschaftlichen Zusammensetzung gemäß einem der vorhergehenden Ansprüche, **wobei** die Zusammensetzung einen Gehalt an freien Aminosäuren in einem Verhältnis zwischen 65,0 und 95,0 Gew.-% und vorzugsweise zwischen 70,0 und 90,0 Gew.-% bezogen auf das Gesamtgewicht der Zusammensetzung aufweist.

9. - Verwendung einer landwirtschaftlichen Zusammensetzung gemäß einem der vorhergehenden Ansprüche, **wobei** die Behandlung mit einer Blattapplikationsproduktdosis zwischen 0,25 kg/ha und 1,5 kg/ha durchgeführt wird.

10. - Verwendung einer landwirtschaftlichen Zusammensetzung gemäß einem der Ansprüche 1 bis 8, **wobei** die Behandlung mit einer Fertigationsdosis zwischen 3,0 kg/ha und 5,0 kg/ha durchgeführt wird.

11. - Verwendung einer landwirtschaftlichen Zusammensetzung gemäß einem der Ansprüche 1 bis 8, **wobei** die Behandlung mit einer Produktdosis zwischen 0,1 kg/ha und 0,4 kg/ha aus der Luft durchgeführt wird.

12. - Verwendung einer landwirtschaftlichen Zusammensetzung gemäß einem der vorhergehenden Ansprüche, **wobei** die Zusammensetzung mit einem Pflanzenschutzmittel gemischt wird.

## Revendications

1. Utilisation d'une composition agricole qui comprend :
- un état solide sous forme de poudre ou de microgranulés, soluble en phase aqueuse et avec une faible teneur en humidité,
- une teneur en azote supérieure à 10,0 % en poids par rapport au poids total de la composition,
- une teneur en azote organique supérieure à 10,0 % en poids par rapport au poids total de la composition,
- une teneur en acides aminés libres supérieure à 65,0 % en poids par rapport au poids total de la composition,
- un aminogramme caractéristique et stable qui comprend alanine (Ala), arginine (Arg), acide aspartique (Asp), cystéine (Cys), acide glutamique (Glu), glycine (Gly), histidine (His), isoleucine (Ile), leucine (Leu), lysine (Lys), méthionine (Met), phénylalanine (Phe), proline (Pro), sérine (Ser), tyrosine (Tyr), thréonine (Thr) et valine (Val), et en option hydroxyproline (Hyp) et tryptophane (Trp),
**dans laquelle** l'aminogramme de la composition agricole présente, dans sa composition, un pourcentage supérieur à 8,0 % en poids d'acides aminés dans le groupe formé par : acide glutamique (Glu), glycine (Gly), proline (Pro) et sérine (Ser),
**en tant que** biostimulant contre le stress biotique et abiotique dans les exploitations agricoles.

2. Utilisation d'une composition agricole selon la revendication précédente,
**dans laquelle** l'aminogramme de la composition agricole présente, dans sa composition, au moins 6 acides aminés dans un pourcentage supérieur à 5,0 % en poids d'acides aminés dans le groupe formé par : alanine (Ala), arginine (Arg), acide aspartique (Asp), leucine (Leu), phénylalanine (Phe), thréonine (Thr) et valine (Val).

3. Utilisation d'une composition agricole selon l'une quelconque des revendications précédentes, **dans laquelle** l'aminogramme de la composition agricole présente, dans sa composition, un pourcentage supérieur à 10,0 % en poids d'acides aminés dans le groupe formé par : acide glutamique (Glu), proline (Pro) et sérine (Ser).

4. Utilisation d'une composition agricole selon l'une quelconque des revendications précédentes, **dans laquelle** la solubilité de la composition est supérieure à 50,0 grammes de la composition/litre d'eau, comprise de préférence entre 100,0 et 250,0 grammes de la composition/litre d'eau.

5. Utilisation d'une composition agricole selon l'une quelconque des revendications précédentes, **dans laquelle** la teneur en humidité de la composition est comprise entre 2,0% et 10,0 % en poids et de préférence entre 3,0% et 5,0 % en poids.

6. Utilisation d'une composition agricole selon l'une quelconque des revendications précédentes, **dans laquelle** la composition se présente sous forme de poudre ou de microgranulés avec un diamètre moyen de particules inférieur à 300 microns.

7. Utilisation d'une composition agricole selon l'une quelconque des revendications précédentes, **dans laquelle** la composition présente une teneur en azote et/ou une teneur en azote organique dans une proportion comprise entre 10,4 % et 13,0 % en poids par rapport au poids total de la composition.

8. Utilisation d'une composition agricole selon l'une quelconque des revendications précédentes, **dans laquelle** la composition présente une teneur en acides aminés libres dans une proportion comprise entre 65,0 % et 95,0 % en poids, et de préférence entre 70,0% et 90,0 % en poids, par rapport au poids total de la composition.

9. Utilisation d'une composition agricole selon l'une quelconque des revendications précédentes, **dans laquelle** le traitement est réalisé avec une dose de produit d'application foliaire comprise entre 0,25 kg/ha et 1,5 kg/ha.

10. Utilisation d'une composition agricole selon l'une quelconque des revendications 1 à 8, **dans laquelle** le traitement est réalisé avec une dose de produit d'application de fertigation comprise entre 3,0 kg/ha et 5,0 kg/ha.

11. Utilisation d'une composition agricole selon l'une quelconque des revendications 1 à 8, **dans laquelle** le traitement est réalisé avec une dose de produit d'application aérienne comprise entre 0,1 kg/ha et 0,4 kg/ha.

12. Utilisation d'une composition agricole selon l'une quelconque des revendications précédentes, **dans laquelle** la composition est mélangée avec un produit phytosanitaire.
